(19) Europäisches Patentamt
European Patent Office
Office européen des brevets

(11) **EP 2 159 788 B1**

(12) **EUROPEAN PATENT SPECIFICATION**

(45) Date of publication and mention
of the grant of the patent:
**04.01.2012 Bulletin 2012/01**

(51) Int Cl.:
***G10L 11/02*** (2006.01)

(21) Application number: **08734254.9**

(86) International application number:
**PCT/CN2008/070899**

(22) Date of filing: **07.05.2008**

(87) International publication number:
**WO 2008/148323 (11.12.2008 Gazette 2008/50)**

(54) **A VOICE ACTIVITY DETECTING DEVICE AND METHOD**

SPRACHAKTIVITÄTSDETEKTIONSEINRICHTUNG UND VERFAHREN

PROCÉDÉ ET DISPOSITIF DE DÉTECTION D'ACTIVITÉ VOCALE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **07.06.2007 CN 200710108408**

(43) Date of publication of application:
**03.03.2010 Bulletin 2010/09**

(73) Proprietor: **Huawei Technologies Co., Ltd.
Longgang District, Shenzhen
Guangdong 518129 (CN)**

(72) Inventor: **WANG, Zhe
Shenzhen, Guangdong 518129 (CN)**

(74) Representative: **Epping, Wilhelm et al
Epping Hermann Fischer
Patentanwaltsgesellschaft mbH
Ridlerstrasse 55
80339 München (DE)**

(56) References cited:
CN-A- 1 242 553          CN-A- 1 293 428
CN-A- 1 354 870          CN-A- 1 703 736
CN-A- 1 773 605          US-A- 2004 236 571
US-A1- 2002 152 066      US-A1- 2002 188 445
US-A1- 2003 179 888      US-A1- 2006 217 976
US-B1- 6 216 103         US-B1- 6 453 291

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

The present invention relates generally to a audio signal processing, and more particularly to a voice activity detection device and method.

**Background of the Invention**

In the voice signal processing field, a technology for detecting the voice activity has been widely used. This technology is called voice activity detection (VAD) in the voice coding field; it is called speech endpoint detection in the speech recognition field; it is called speech pause detection in the speech enhancement field. These technologies focus on different aspects in different scenarios, and thus achieve different processing results. In essence, however, these technologies are used to detect whether a speech exists in the case of voice communications or in a corpus. The detection accuracy has direct influences on the quality of subsequent processes (for example, voice coding, speech recognition and enhancement).

The voice coding technology can reduce the transmission bandwidth of voice signals and increase the capacity of a communication system. In a voice communication, 40% of the time involves voice signals, and the rest involves silence or background noises. Thus, to save transmission bandwidth, VAD may be used to differentiate background noises and non-noise signals, so that the encoder can encode the background noises and non-noise signals with different rates, thus reducing the mean bit rate. In recent years, all the voice coding standards formulated by large organizations and institutions cover specific applications of the VAD technology.

In the prior art, the VAD algorithms such as VAD1 and VAD2 used in the adaptive multi-rate speech codec (AMR) judge whether a current signal frame is a noise frame according to the signal noise ratio (SNR) of an input signal. VAD calculates estimated background noise energy, and compares the ratio of the energy of the current signal frame to the energy of the background noise (that is, the SNR) with a preset threshold. When the SNR is greater than the threshold, VAD determines that the current signal frame is a non-noise frame; otherwise, VAD determines that the current signal frame is a noise frame. The VAD classification result is used to guide discontinuous transmission system/comfortable noise generation (DTX/CNG) in the encoder. The purpose of DTX/CNG is to perform discontinuous coding and transmission on only noise sequences when the input signal is in the noise period. The noises that are not coded and transmitted are interpolated at the decoder, so as to save bandwidth.

During the implementation of the present invention, the inventor finds the following problem in the prior art: The VAD algorithm in the prior art is adaptive according to the moving average of a long-term background noise level, and is not adaptive to the background noise variation. Thus, the adaptability is limited.

US 6453291B1 discloses an apparatus and method for voice activity detection in a communication system. In order for the Voice Activity Detector (VAD) decision to overcome the problem of being over-sensitive to fluctuating, non-stationary background noise conditions, a bias factor is used to increase the threshold on which the VAD decision is based. This bias factor is derived from an estimate of the variability of the background noise estimate. The variability estimate is further based on negative values of the instantaneous SNR.

**Summary of the Invention**

Embodiments of the present invention provide a VAD device and method as defined in claims 1 and 4, respectively, so that the VAD threshold can be adaptive to the background noise variation.

**Brief Description of the Drawings**

FIG 1 shows a structure of a VAD device in an embodiment of the present invention; and

Figure 2 is a flowchart of a VAD method in an embodiment of the present invention.

**Detailed Description of the Invention**

The following describes a VAD algorithm in a scenario in an embodiment of the present invention.

In this algorithm, the input signal frame is divided into nine subbands. The signal level level [n] and estimated background noise level bckr_est[n] of each subband are calculated. Then, the SNR is calculated by the following formula according to level[n] and bckr_est[n]:

$$snr = \sum_{n=1}^{9} MAX\left(1.0, \frac{level[n]}{bckr\_est[n]}\right)^2$$

The VAD judgment is to compare the SNR with a threshold vad_thr. If the SNR is greater than vad_thr, the current frame is a non-noise frame; otherwise, the current frame is a noise frame. vad_thr is calculated by the following formula:

$$vad\_thr = VAD\_SLOPE * noise\_level + VAD\_THR\_HIGH$$

where $noise\_level = \sum_{n=1}^{9} bckr\_est[n]$ , VAD-SLOPE=-540/6300, and VAD_THR_HIGH =1260 .

In this VAD algorithm, only noise_level is the dependent variable of vad_thr, but noise_level reflects the moving average of a long-term background noise level. Thus, vad_thr is not adaptive to the background noise variation (because a background with different variations may have the same moving average of the long-term level). In addition, the background variation has a great impact on the VAD judgment. For example, VAD may wrongly determine that a large number of background noises are non-noise signals, thus wasting bandwidth.

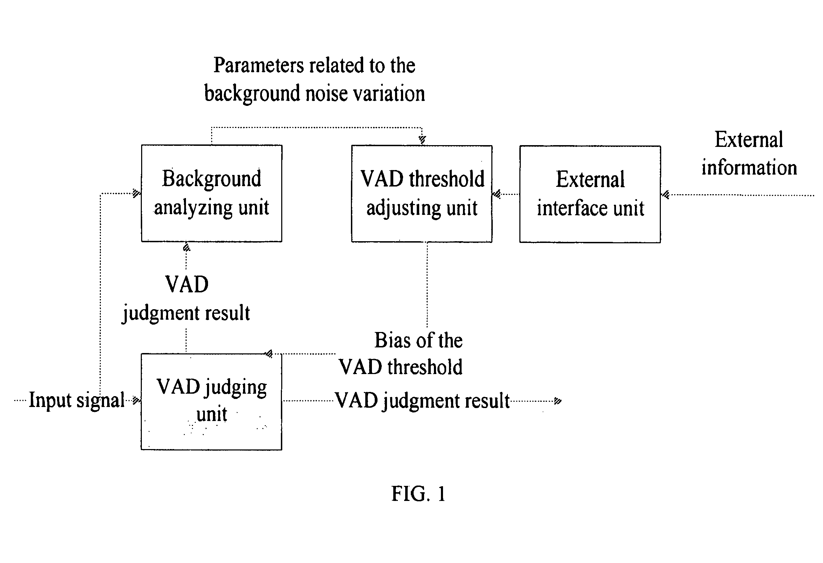

First embodiment: FIG 1 illustrates a VAD device in the first embodiment of the present invention. The VAD device includes a background analyzing unit, a VAD threshold adjusting unit, a VAD judging unit, and an external interface unit.

The background analyzing unit is adapted to: analyze the background noise features of the current signal according to the input VAD judgment result, obtain parameters related to a background noise variation, and output these parameters to the VAD threshold adjusting unit, where these parameters include parameters of the background noise variation. Specifically, the background noise feature parameters are used to identify the size, type (steady background or unsteady background), variation rate and SNR of the background noise of the current signal in the current environment. The background noise feature parameters include at least peak SNR of the background noise, and may further include long-term SNR, estimated background noise level, background noise energy variation, background noise spectrum variation, and background noise variation rate.

The VAD threshold adjusting unit is adapted to: obtain a bias of the VAD threshold according to the parameters output by the background analyzing unit, and output the bias of the VAD threshold.

Specifically, when the VAD threshold adjusting unit receives any one of the parameters output by the background analyzing unit, the VAD threshold adjusting unit updates the bias of the VAD threshold according to the current values of the parameters related to the background noise variation. The VAD threshold adjusting unit may further judge whether the parameter values output by the background analyzing unit are changed; if so, the VAD threshold adjusting unit updates the bias of the VAD threshold according to the current values of the parameters related to the background noise variation.

The bias of the VAD threshold is obtained through internal adaptation of the VAD threshold adjusting unit according to the parameters output by the background analyzing unit, and/or by combining the external work point information of the VAD device (received through the external interface unit) and the parameters output by the background analyzing unit.

When the setting considers only the internal adaptation of the VAD threshold adjusting unit, the VAD threshold adjusting unit obtains a first bias of the VAD threshold according to the parameters output by the background analyzing unit, and outputs the first bias of the VAD threshold as a final bias of the VAD threshold to the VAD judging unit.

When the setting considers the external information of the VAD device and the internal adaptation of the VAD threshold adjusting unit and the background noise of the current signal is a steady noise and/or the SNR of the current signal is high, the VAD judgment result of the VAD judging unit is closer to the ideal result, making it unnecessary to calculate a second bias of the VAD threshold according to the external information. Thus, the VAD threshold adjusting unit obtains the first bias of the VAD threshold according to the parameters output by the background analyzing unit, and outputs the first bias of the VAD threshold as a final bias of the VAD threshold to the VAD judging unit.

When the setting considers the external information of the VAD device and the internal adaptation of the VAD threshold adjusting unit and the background noise of the current signal is a non-steady noise and/or the SNR of the current signal is low, the VAD threshold adjusting unit obtains a first bias of the VAD threshold according to the parameters output by the background analyzing unit and a second bias of the VAD threshold according to the parameters output by the background analyzing unit and the external information of the VAD device, obtains a final bias of the VAD threshold by combining the first bias of the VAD threshold and the second bias of the VAD threshold (for example, adding up these two thresholds or processing these two thresholds in other ways), and outputs the final bias of the VAD threshold to the VAD judging unit.

When the setting considers only the external information of the VAD device, the VAD threshold adjusting unit obtains a second bias of the VAD threshold according to the parameters output by the background analyzing unit and the external information of the VAD device, and outputs the second bias of the VAD threshold as a final bias of the VAD threshold to the VAD judging unit.

The VAD judging unit is adapted to: modify a VAD threshold to be modified according to the bias of the VAD threshold output by the VAD threshold adjusting unit, judge the background noise by using the modified VAD threshold, and output the VAD judgment result to the background analyzing unit so as to implement constant adaptation of the VAD threshold. In addition, the VAD judging unit is adapted to output the VAD judgment result.

In the VAD algorithm in another scenario in the first embodiment, the method for determining a VAD threshold to be modified has the following relationship with the SNR: In the method for calculating a threshold to be modified in AMR VAD2, multiple thresholds to be modified are pre-stored in an array. These thresholds have certain mapping relationships with the long-term SNR. VAD selects a threshold to be modified in the array according to the current long-term SNR, and uses the selected threshold as the VAD threshold to be modified. The method for determining a VAD threshold to be modified in this embodiment may include: using the long-term SNR of the current signal as the threshold to be modified. For example, supposing the final VAD threshold is 100, and the bias of the VAD threshold output by the VAD threshold adjusting unit is 10, and the current VAD threshold to be modified is 95, the modified final VAD threshold is 105. Then, the VAD judging unit changes the VAD threshold from 100 to 105, and continues the judgment.

Specifically, VAD in this embodiment includes VAD for differentiating the background noise and non-background noise and new VAD in SAD for differentiating the background noise, voice, and music. For VAD, the classified type includes background noise and non noise. For SAD, the classified type includes background noise, voice, and music. In this embodiment, the VAD in SAD categorizes the input signal into background noise and non noise. That is, it processes the voice and music as the same type.

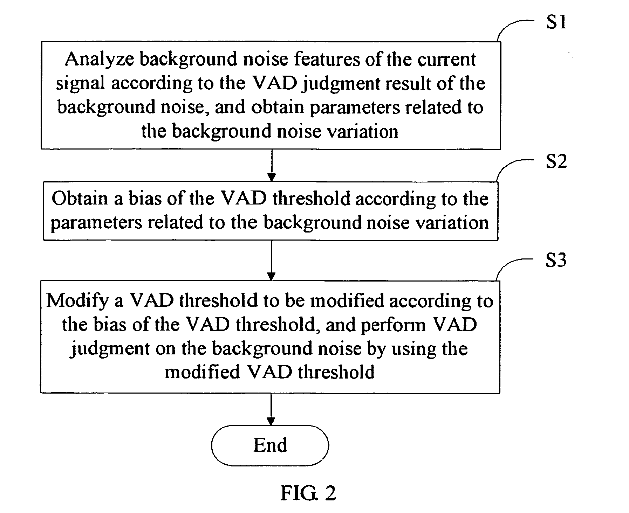

Second embodiment: FIG. 2 shows a VAD method in the second embodiment of the present invention. The VAD method includes the following steps:

S1. Analyze background noise features of the current signal according to the VAD judgment result of the background noise, and obtain parameters related to the background noise variation.

The parameters related to the background noise variation include at least peak SNR of the background noise, and may further include a background energy variation size, a background noise spectrum variation size, and/or a background noise variation rate. In the process of obtaining the parameters related to the background noise variation, other parameters that represent the background noise features of the current signal are also obtained, for example, the long-term SNR and estimated background noise level.

S2. Obtain a bias of the VAD threshold according to the parameters related to the background noise variation.

When any one of the parameters related to the background noise variation is updated, the bias of the VAD threshold is updated according to the current values of the parameters related to the background noise variation.

Specifically, the method for obtaining a bias of the VAD threshold according to the current values of the parameters related to the background noise variation includes but is not limited to the following four cases:

Case 1: When the setting does not need to consider the specified information, a first bias of the VAD threshold is obtained according to the parameters related to the background noise variation, and the first bias of the VAD threshold is used as a final bias of the VAD threshold.

Case 2: When the setting needs to consider the specified information and the background sound is an unsteady noise and/or the SNR is low, a first bias of the VAD threshold is obtained according to the parameters related to the background noise variation and a second bias of the VAD threshold is obtained according to the parameters related to the background noise variation and the specified information; a final bias of the VAD threshold is obtained by combining the first bias of the VAD threshold and the second bias of the VAD threshold (for example, adding up these two thresholds or processing these two thresholds in other ways).

Case 3: When the setting needs to consider the specified information and the background sound is a steady noise and/or the SNR is high, a first bias of the VAD threshold is obtained according to the parameters related to the background noise variation, and the first bias of the VAD threshold is used as a final bias of the VAD threshold.
Case 4: When the setting considers the specified information only, a second bias of the VAD threshold is obtained according to the parameters related to the background noise variation and the specified information, and the second bias of the VAD threshold is used as a final bias of the VAD threshold.

In the preceding cases 1 to 3, the first bias of the VAD threshold increases with the increase of the background noise energy variation, background noise spectrum variation size, background noise variation rate, long-term SNR, and/or peak SNR of the background noise. The first bias of the VAD threshold may be calculated by one of the following formulas:

vad_thr_delta = $\beta$*(snr_peak-vad_thr_default), where vad_thr_delta indicates the first bias of the VAD threshold; vad_thr_default indicates the VAD threshold to be modified; snr_peak indicates the peak SNR of the background noise; and $\beta$ is a constant.

vad_thr_delta = $\beta$*f (var_rate)* (snr_peak-vad_thr_default), where vad_thr_delta indicates the first bias of the VAD threshold; vad_thr_default indicates the VAD threshold to be modified; snr_peak indicates the peak SNR of the background noise; $\beta$ is a constant; var_rate indicates the background noise variation rate; and f() indicates a function.

vad_thr_delta = $\beta$*f(var_rate)*f(pow_var)* (snr_peak-vad_thr_default), where vad_thr_delta indicates the first bias of the VAD threshold; vad_thr_default indicates the VAD threshold to be modified; snr_peak indicates the peak SNR of the background noise; $\beta$ is a constant; pow_var indicates the background energy variation size; var_rate indicates the background noise variation rate; and f()indicates a function.

vad_thr_delta = $\beta$*f(var_rate)*f(spec_var)* (snr_peak-vad_thr-default), where vad_thr_delta indicates the first bias of the VAD threshold; vad_thr_default indicates the VAD threshold to be modified; snr_peak indicates the peak SNR of the background noise; $\beta$ is a constant; spec_var indicates the background noise spectrum variation size; var_rate indicates the background noise variation rate; and f()indicates a function.

vad_thr_delta = $\beta$*f (var_rate)*f (pow_var)*f (spec_var)* (snr_peak-vad_thr_default), where vad_thr_delta indicates the first bias of the VAD threshold; vad_thr_default indicates the VAD threshold to be modified; snr_peak indicates the peak SNR of the background noise; $\beta$ is a constant; spec_var indicates the background noise spectrum variation size; var_rate indicates the background noise variation rate; pow_var indicates the background energy variation size; and f()indicates a function.

Note: A long-term SNR parameter may be added to each of the preceding formulas for calculating the first bias of the VAD threshold. That is, the preceding formulas may also be applicable after a long-term SRN function is multiplied.

In the preceding cases 2 and 4, the absolute value of the second bias of the VAD threshold increases with the increase of the background noise energy variation, background noise spectrum variation size, background noise variation rate, long-term SNR, and/or peak SNR of the background noise. In addition, the specified information indicates a work point orientation and is represented by a positive or negative sign in the formulas. When the specified work point is a quality orientation, the sign is negative; when the specified work point is a bandwidth-saving orientation, the sign is positive. The second bias of the VAD threshold may be calculated by one of the following formulas:

vad_thr_delta_out = sign *$\gamma$*(snr_peak-vad_thr_default), where vad_thr_delta_out indicates the second bias of the VAD threshold; vad_thr_default indicates the VAD threshold to be modified; sign indicates the positive or negative sign of vad_thr_delta_out determined by the orientation of the specified information; snr_peak indicates the peak SNR of the background noise; and $\gamma$ is a constant.

vad_thr_delta_out = sign *$\gamma$*f (var_rate)* (snr_peak-vad_thr_default), where vad_thr_delta_out indicates the second bias of the VAD threshold; vad_thr_default indicates the VAD threshold to be modified; sign indicates the positive or negative sign of vad_thr_delta_out determined by the orientation of the specified information; snr_peak indicates the peak SNR of the background noise; $\gamma$ is a constant; var_rate indicates the background noise variation rate; and f()indicates a function.

vad_thr_delta_out = sign *$\gamma$*f(var_rate)*f(pow_var)* (snr_peak-vad thr_default), where vad_thr_delta_out indicates the second bias of the VAD threshold; vad_thr_default indicates the VAD threshold to be modified; sign indicates the positive or negative sign of vad_thr_delta_out determined by the orientation of the specified information; snr_peak indicates the peak SNR of the background noise; $\gamma$ is a constant; pow_var indicates the background energy variation size; var_rate indicates the background noise variation rate; and f()indicates a function.

vad_thr_delta_out = sign *$\gamma$*f(var_rate)*f(pow_var)* (snr_peak-vad_thr_default), where vad_thr_delta_out indicates the second bias of the VAD threshold; vad_thr_default indicates the VAD threshold to be modified; sign indicates the positive or negative sign of vad_thr_delta_out determined by the orientation of the specified information; snr_peak indicates the peak SNR of the background noise; $\gamma$ is a constant; spec_var indicates the background noise spectrum variation size; var_rate indicates the background noise variation rate; and f()indicates a function.

vad_thr_delta_out = sign *γ*f(var_rate)*f(pow_var)*f(spec_var)* (snr_peak-vad_thr_default), where vad_thr_delta_out indicates the second bias of the VAD threshold; vad_thr_default indicates the VAD threshold to be modified; sign indicates the positive or negative sign of vad_thr_delta_out determined by the orientation of the specified information; snr_peak indicates the peak SNR of the background noise; γ is a constant; spec_var indicates the background noise spectrum variation size; var_rate indicates the background noise variation rate; pow_var indicates the background energy variation size; and f()indicates a function.

Note: A long-term SNR parameter may be added to each of the preceding formulas for calculating the second bias of the VAD threshold. That is, the preceding formulas may also be applicable after a long-term SRN function is multiplied.

In the preceding formulas for calculating the first bias of the VAD threshold and the second bias of the VAD threshold, snr_peak is the largest SNR of the SNRs corresponding to each background noise frame between two adjacent non-background noise frames, or the smallest SNR of the SNRs corresponding to each non-background noise frame between two adjacent background noise frames, or any one of the SNRs corresponding to each non-background noise frame between two background noise frames with the interval smaller than a preset number of frames, or any one of the SNRs corresponding to each non-background noise frame that are smaller than a preset threshold between two background noise frames with the interval greater than a preset number of frames. The threshold is set according to the following rule: Suppose the SNRs of all the non-background noise frames between the two background noise frames comprise two sets: one is composed of all the SNRs greater than a threshold, and the other is composed of all the SNRs smaller than the threshold; a threshold that maximizes the difference between the mean values of these two sets is determined as the preset threshold.

S3. Modify a VAD threshold to be modified according to the bias of the VAD threshold, and perform VAD judgment on the background noise by using the modified VAD threshold.

Third embodiment: This embodiment provides a modular process by combining the VAD device and method provided in the preceding embodiments.

Step 1: The VAD judging unit performs initial judgment on the type of the input audio signal, and inputs the VAD judgment result to the background analyzing unit.

The initial bias of the VAD threshold is 0. The VAD judging unit performs VAD judgment according to the VAD threshold to be modified. For example, the VAD threshold to be modified is to secure a balance between the quality and the bandwidth saving.

Step 2: When the background analyzing unit knows that the current frame is a background noise frame according to the VAD judgment result, the background analyzing unit calculates the short-term background noise feature parameters of the current frame, and stores these parameters in the memory. The following describes these parameters and methods for calculating these parameters:

1. Subband level level [k, i], where k and i indicate the level of the $k^{th}$ subband of the $i^{th}$ frame. The subband may be calculated by using a filter group or a conversion method.

2. Short-term background noise level bckr_noise [i] (calculated only when the current frame is a background frame),

$$bckr\_noise[i] = \sum_{k=1}^{N} level[k,i],$$ where i indicates the background noise level of

the $i^{th}$ frame; k indicates the $k^{th}$ subband; and N indicates the total number of subbands.

3. Frame energy pow [i],

$$pow[i] = \sum_{k=1}^{N} level[k,i]^2 ,$$ where i indicates the frame energy of the $i^{th}$ frame.

4. Short-term SNR snr [i],

$$snr[i] = \frac{pow[i]}{bckr\_noise\_pow[i]},$$ where i indicates the short-term SNR of the $i^{th}$ frame, and bckr_noise_pow [i] indicates the estimated background noise energy. These parameters will be described later.

Step 3: When the background analyzing unit has analyzed a certain number of frames, the background analyzing unit begins to calculate the long-term background noise feature parameters according to the history short-term background noise feature parameters in the memory, and outputs the parameters related to the background noise variation. Then, the parameters related to the background noise variation are updated continuously. Except the long-term SNR, other parameters are updated only when the current frame is a background frame. The long-term SNR is updated only when the current frame is a non-background noise. The following describes these parameters and methods for calculating these parameters:

1. Estimated long-term background noise level bckr_noise_long [i],

$$bckr\_noise\_long[i] = (1-\alpha)*bckr\_noise\_long[i-1]+\alpha*bckr\_noise[i] \quad ,$$

where $\alpha$ is a scale factor between 0 and 1 and its value is about 5%.

2. Long-term SNR snr-long[i],

$$snr\_long[i] = \frac{\sum_{m=i-L+1}^{i} snr[m]}{L},$$ where L indicates the number of non-background frames that are selected for long-term average calculation.

3. Background noise energy variation pow_var [i],

$$pow\_var[i] = \frac{1}{L}*\sum_{m=i-L+1}^{i}\left(pow[m]-\frac{1}{L}*\sum_{m=i-L+1}^{i}pow[m]\right)^2,$$ where L indicates the number of background frames that are selected for long-term average calculation.

4. Background noise spectrum variation spec_var [i],

$$spec\_var[i] = \sum_{m=i-L+1}^{i}\left(\sum_{n=i-L+1,n\neq m}^{i}\left(\sum_{k=1}^{N}(level[k,m]-level[k,n])^2\right)\right) \quad ,$$ where L indicates the number of background frames that are selected for long-term average calculation. The background noise spectrum variation may also be calculated based on the line spectrum frequency (LSF) coefficient.

5. Background noise variation rate var_rate[i],

$$\mathbf{var\_rate} = \sum_{m=i-L+1}^{i} \amalg\{snr[i] < 0\},$$ where LI{x} is equal to 1 when x is true; otherwise it is equal to 0; and L indicates the number of background frames that are selected for long-term average calculation.

6. Estimated long-term background noise energy bckr_noise_pow [i],

$$bckr\_noise\_pow[i] = (1-\alpha)*bckr\_noise\_pow[i-1]+\alpha*pow[i],$$

where $\alpha$ is a scale factor between 0 and 1 and its value is about 5%.

Step 4: The VAD threshold adjusting unit calculates the bias of the VAD threshold according to the parameters that are related to the background noise variation and output by the background analyzing unit.

In the process of modifying the VAD threshold, a bias of the VAD threshold should be obtained so as to modify the VAD threshold in the corresponding direction at an amplitude.

According to the first case in step S2 in the second embodiment, the VAD threshold adjusting unit obtains the first bias of the VAD threshold through the internal adaptation, and uses the first bias of the VAD threshold as the final bias of the VAD threshold, without considering the externally specified information. Supposing the current VAD threshold to be modified is vad_thr_default and the first bias of the VAD threshold is vad_thr_delta, the modified VAD threshold is vad_thr_default + vad_thr_delta. Then, the first bias of the VAD threshold is calculated by the following formula: vad_thr_delta = β*(snr_peak-vad_thr_default), where snr_peak indicates the background peak SRN and β is a constant. snr_peak may be a peak SNR in a long-term history background frame section; that is, snr_peak = MAX(snr[i]), i=0,-1,-2...-n, where i indicates the latest history background frame and the first background frame to the nth background frame before the latest history background frame. snr_peak may also be a valley SNR in a history non-background frame section or one of multiple smallest SNRs. In this case, snr_peak = MIN (snr [i]), i=0,-1,-2...-n, where i indicates the latest history non-background frame and the first non-background frame to the $n^{th}$ non-background frame before the latest history non-background frame, or snr_peak$\in${X}, where {X} indicates a subset of a set of SNRs ({Y}) in a long-term history non-background frame section, and maximizes the value of |MEAN({X})-MEAN({Y-X})|, where MEAN indicates the mean value. var_rate indicates the times of negative SNRs in a long-term background.

That is, snr_peak is the largest SNR of the SNRs corresponding to each background noise frame between two adjacent non-background noise frames, or the smallest SNR of the SNRs corresponding to each non-background noise frame between two adjacent background noise frames, or any one of the SNRs corresponding to each non-background noise frame between two background noise frames with the interval smaller than a preset number of frames, or any one of the SNRs corresponding to each non-background noise frame that are smaller than a preset threshold between two background noise frames with the interval greater than a preset number of frames. The threshold is set according to the following rule: Suppose the SNRs of all the non-background noise frames between the two background noise frames comprise two sets: one is composed of all the SNRs greater than a threshold, and the other is composed of all the SNRs smaller than the threshold; a threshold that maximizes the difference between the mean values of these two sets is determined as the preset threshold.

In a VAD algorithm with multiple thresholds, each threshold or several of these thresholds may be adjusted according to the preceding method.

Step 5: The VAD judging unit modifies a VAD threshold to be modified according to the bias of the VAD threshold output by the VAD threshold adjusting unit, judges the background noise according to the modified VAD threshold, and outputs the VAD judgment result.

If the VAD threshold adjusting unit obtains the bias of the VAD threshold according to the first case, the modified VAD threshold is vad_thr_default + vad_thr_delta.

In conclusion, in embodiments of the present invention, the background noise features of the current signal are analyzed according to the VAD judgment result of the background noise, and the parameters related to the background noise variation are obtained, making the VAD threshold adaptive to the background noise variation. Then, the bias of the VAD threshold is obtained according to the parameters related to the background noise variation; the VAD threshold to be modified is modified according to the bias of the VAD threshold, and a VAD threshold that can reflect the background noise variation is obtained; and the VAD judgment is performed on the background noise by using the modified VAD threshold. Thus, the VAD threshold is adaptive to the background noise variation, so that VAD can achieve an optimum performance in a background noise environment with different variations.

Further, embodiments of the present invention provide different implementation modes according to the methods for obtaining the bias of the VAD threshold. In particular, embodiments of the present invention describe the solution for calculating the value of the peak SNR of the background noise (snr_peak), which better supports the present invention.

It is understandable to those skilled in the art that all or part of the steps in the methods according to the preceding embodiments may be performed by hardware instructed by a program. The program may be stored in a computer readable storage medium, such as a Read-Only Memory/Random Access Memory (ROM/RAM), a magnetic disk, and a compact disk.

It is apparent that those skilled in the art can make various changes and modifications to the present invention without departing from the scope of the present invention. The present invention is intended to cover such changes and modifications provided that they fall in the scope of protection defined by the following claims.

## Claims

1. A voice activity detection (VAD) device, comprising:

   a background analyzing unit adapted to analyze background noise features of a current signal according to an input VAD judgment result, obtain parameters related to a background noise variation, and output the obtained parameters;
   a VAD threshold adjusting unit adapted to obtain a bias of the VAD threshold according to the parameters output by the background analyzing unit, and output the bias of the VAD threshold;
   a VAD judging unit adapted to modify a VAD threshold to be modified according to the bias of the VAD threshold output by the VAD threshold adjusting unit, perform a background noise judgment according to the modified VAD threshold, and output a VAD judgment result; and
   an external interface unit;
   wherein the bias of the VAD threshold is obtained through internal adaptation of the VAD threshold adjusting unit according to the parameters output by the background analyzing unit, and/or combining the external work point information of the VAD device received through the external interface unit and the parameters output by the background analyzing unit, so that:

when the setting considers only the internal adaptation of the VAD threshold adjusting unit, or when the setting considers the external information of the VAD device and the internal adaptation of the VAD threshold adjusting unit and the background noise of the current signal is a steady noise and/or the SNR of the current signal is high, the VAD threshold adjusting unit obtains a first bias of the VAD threshold according to the parameters output by the background analyzing unit, and outputs the first bias of the VAD threshold as a final bias of the VAD threshold to the VAD judging unit;

when the setting considers the external information of the VAD device and the internal adaptation of the VAD threshold adjusting unit and the background noise of the current signal is a non-steady noise and/or the SNR of the current signal is low, the VAD threshold adjusting unit obtains a first bias of the VAD threshold according to the parameters output by the background analyzing unit and a second bias of the VAD threshold according to the parameters output by the background analyzing unit and the external information of the device, obtains a final bias of the VAD threshold by combining the first bias of the VAD threshold and the second bias of the VAD threshold, and outputs the final bias of the VAD threshold to the VAD judging unit; and when the setting considers only the external information of the VAD device, the VAD threshold adjusting unit obtains a second bias of the VAD threshold according to the parameters output by the background analyzing unit and the external information of the device, and outputs the second bias of the VAD threshold as a final bias of the VAD threshold to the VAD judging unit.

2. The VAD device of claim 1, wherein the parameters output by the background analyzing unit comprise a peak signal noise ratio (SNR) of the background noise, and may further comprise at least one of background noise energy variation, background noise spectrum variation, long-term SNR, and background noise variation rate.

3. The VAD device of claim 1 or 2, wherein, when the VAD threshold adjusting unit receives any one of the parameters output by the background analyzing unit, the VAD threshold adjusting unit adapted to update the bias of the VAD threshold according to current values of the parameters related to the background noise variation.

4. A voice activity detection (VAD) method, comprising:

analyzing background noise features of a current signal according to a VAD judgment result of a background noise, and obtaining parameters related to a background noise variation;
obtaining a bias of the VAD threshold according to the parameters related to the background noise variation; and modifying a VAD threshold to be modified according to the bias of the VAD threshold, and performing VAD judgment on the background noise by using the modified VAD threshold;
wherein the method for obtaining a bias of the VAD threshold according to the parameters related to the background noise variation comprises at least one of following blocks:
when the setting does not need to consider specified information, obtaining a first bias of the VAD threshold according to the parameters related to the background noise variation, and using the first bias of the VAD threshold as a final bias of the VAD threshold;
when the setting needs to consider specified information and the background sound is an unsteady noise and/or a signal noise ratio (SNR) is low, obtaining a first bias of the VAD threshold according to the parameters related to the background noise variation and a second bias of the VAD threshold according to the parameters related to the background noise variation and the specified information, and obtaining a final bias of the VAD threshold by combining the first bias of the VAD threshold and the second bias of the VAD threshold;
when the setting needs to consider specified information and the background sound is a steady noise and/or the SNR is high, obtaining a first bias of the VAD threshold according to the parameters related to the background noise variation, and using the first bias of the VAD threshold as a final bias of the VAD threshold; and
when the setting considers specified information only, obtaining a second bias of the VAD threshold according to the parameters related to the background noise variation and the specified information, and using the second bias of the VAD threshold as a final bias of the VAD threshold;
wherein the specified information indicates a work point.

5. The VAD method of claim 4, wherein the parameters related to the background noise variation comprise a peak signal noise ratio (SNR) of the background noise, the parameters further comprises at least one of a background energy variation size, a background noise spectrum variation size, a long-term SNR, and a background noise variation rate.

6. The VAD method of claim 4 or 5, wherein, when any of the parameters related to the background noise variation is updated, the method comprises: updating the bias of the VAD threshold according to current values of the parameters related to the background noise variation.

7. The VAD method of claim 4 wherein the first bias of the VAD threshold increases with at least one of the increase of the background noise energy variation, background noise spectrum variation size, background noise variation rate, long-term SNR, and peak SNR of the background noise.

8. The VAD method of claim 7 further comprises at least one of following:

$$vad\_thr\_delta = ß*(snr\_peak-vad\_thr\_default);$$

$$vad\_thr\_delta = ß*f(var\_rate)* (snr\_peak-vad\_thr\_default);$$

$$vad\_thr\_delta = ß*f(var\_rate)*f(pow\_var)* (snr\_peak-vad\_thr\_default);$$

$$vad\_thr\_delta = ß*f(var\_rate)*f(spec\_var)* (snr\_peak-vad\_thr\_default);$$

and

$$vad\_thr\_delta = ß*f(var\_rate)*f(pow\_var)*f(spec\_var)*$$
$$(snr\_peak-vad\_thr\_default),$$

wherein vad_thr_delta indicates the first bias of the VAD threshold; vad_thr_default indicates the VAD threshold to be modified; snr_peak indicates the peak SNR of the background noise; is a constant; var_rate indicates the background noise variation rate; f() indicates a function; pow_var indicates the background energy variation size;; and spec_var indicates the background noise spectrum variation size.

9. The VAD method of claim 4, wherein an absolute value of the second bias of the VAD threshold increases with at least one of the increase of the background noise energy variation, background noise spectrum variation size, background noise variation rate, long-term SNR, and peak SNR of the background noise.

10. The VAD method of claim 9 .further comprises at least one of following:

$$vad\_thr\_delta\_out = sign *y*(snr\_peak-vad\_thr\_default);$$

$$vad\_thr\_delta\_out = sign *y*f(var\_rate)* (snr\_peak-vad\_thr\_default);$$

$$vad\_thr\_delta\_out = sign *y*f(var\_rate)*f(pow\_var)* (snr\_peak-vad\_thr\_default);$$

$$vad\_thr\_delta\_out = sign *y*f(var\_rate)*f(spec\_var)* (snr\_peak-vad\_thr\_default);$$

and

$$vad\_thr\_delta\_out = sign * y * f(var\_rate) * f(pow\_var) * f(spec\_var) *$$

$$(snr\_peak - vad\_thr\_default),$$

wherein vad_thr_delta_out indicates the second bias of the VAD threshold; vad_thr_default indicates the VAD threshold to be modified; sign indicates a positive or negative sign of vad_thr_delta_out determined by an orientation of the specified information; snr_peak indicates the peak SNR of the background noise; y is a constant; var_rate indicates the background noise variation rate; f() indicates a function; pow_var indicates the background energy variation size; and spec_var indicates the background noise spectrum variation size.

11. The method of any of claims 8 or 10, wherein snr_peak is a largest SNR of SNRs corresponding to each background noise frame between two adjacent non-background noise frames; or
snr_peak is a smallest SNR of SNRs corresponding to each non-background noise frame between two adjacent background noise frames; or
snr_peak is any one of SNRs corresponding to each non-background noise frame between two background noise frames with an interval smaller than a preset number of frames; or
snr_peak is any one of SNRs corresponding to non-background noise frames that are smaller than a preset threshold between two background noise frames with an interval greater than a preset number of frames.

12. The method of claim 11, wherein if snr_peak is any one of SNRs corresponding to non-background noise frames that are smaller than a preset threshold between two background noise frames with an interval greater than a preset number of frames, the threshold is set according to the rule of: supposing all the SNRs of the non-background noise frames between the two background noise frames comprise two sets, wherein one set is composed of all the SNRs larger than a threshold and the other is composed of all the SNRs smaller than the threshold, a threshold that maximizes the difference between mean values of each set is determined as the preset threshold.

**Patentansprüche**

1. Einrichtung zur Sprachaktivitätsdetektion bzw. VAD, umfassend:

eine Hintergrundanalyseeinheit, die dafür ausgelegt ist, Hintergrundgeräuschmerkmale eines aktuellen Signals gemäß einem Eingangs-VAD-Beurteilungsergebnis zu analysieren, Parameter in Bezug auf eine Hintergrundgeräuschvariation zu erhalten und die erhaltenen Parameter auszugeben;
eine VAD-Schwellenjustiereinheit, die dafür ausgelegt ist, ein Bias der VAD-Schwelle gemäß den durch die Hintergrundanalyseeinheit ausgegebenen Parametern zu erhalten und das Bias der VAD-Schwelle auszugeben;
eine VAD-Beurteilungseinheit, die dafür ausgelegt ist, eine zu modifizierende VAD-Schwelle gemäß dem durch die VAD-Schwellenjustiereinheit ausgegebenen Bias der VAD-Schwelle zu modifizieren, gemäß der modifizierten VAD-Schwelle eine Hintergrundgeräuschbeurteilung durchzuführen und ein VAD-Beurteilungsergebnis auszugeben; und
eine externe Schnittstelleneinheit;
wobei das Bias der VAD-Schwelle durch interne Anpassung der VAD-Schwellenjustiereinheit gemäß den durch die Hintergrundanalyseeinheit ausgegebenen Parametern und/oder Kombinieren der durch die externe Schnittstelleneinheit empfangenen externen Arbeitspunktinformationen der VAD-Einrichtung und der durch die Hintergrundanalyseeinheit ausgegebenen Parameter erhalten wird, dergestalt, dass
wenn die Einstellung nur die interne Anpassung der VAD-Schwellenjustiereinheit betrachtet oder wenn die Einstellung die externen Informationen der VAD-Einrichtung und die interne Anpassung der VAD-Schwellenjustiereinheit betrachtet und das Hintergrundgeräusch des aktuellen Signals ein gleichmäßiges Geräusch ist und/oder der SNR des aktuellen Signals hoch ist, die VAD-Schwellenjustiereinheit ein erstes Bias der VAD-Schwelle gemäß den durch die Hintergrundanalyseeinheit ausgegebenen Parametern erhält und das erste Bias der VAD-Schwelle als ein Endbias der VAD-Schwelle an die VAD-Beurteilungseinheit ausgibt;
wenn die Einstellung die externen Informationen der VAD-Einrichtung und die interne Anpassung der VAD-Schwellenjustiereinheit betrachtet und das Hintergrundgeräusch des aktuellen Signals ein nichtgleichmäßiges Geräusch ist und/oder der SNR des aktuellen Signals niedrig ist, die VAD-Schwellenjustiereinheit ein erstes Bias der VAD-Schwelle gemäß den durch die Hintergrundanalyseeinheit ausgegebenen Parametern und ein zweites Bias der VAD-Schwelle gemäß den durch die Hintergrundanalyseeinheit ausgegebenen Parametern und den externen Informationen der Einrichtung erhält, ein Endbias der VAD-Schwelle durch Kombinieren des ersten Bias der VAD-Schwelle und des zweiten Bias der VAD-Schwelle erhält und das Endbias der VAD-Schwelle an die VAD-Beurteilungseinheit ausgibt; und

wenn die Einstellung nur die externen Informationen der VAD-Einrichtung betrachtet, die VAD-Schwellenjustiereinheit ein zweites Bias der VAD-Schwelle gemäß den durch die Hintergrundanalyseeinheit ausgegebenen Parametern und den externen Informationen der Einrichtung erhält und das zweite Bias der VAD-Schwelle als ein Endbias der VAD-Schwelle an die VAD-Beurteilungseinheit ausgibt.

2. VAD-Einrichtung nach Anspruch 1, wobei die durch die Hintergrundanalyseeinheit ausgegebenen Parameter einen Spitzen-Rauschabstand bzw. -SNR des Hintergrundgeräuschs umfassen und ferner mindestens eine der folgenden Alternativen umfassen können: Hintergrundgeräusch-Energievariation, Hintergrundgeräusch-Spektrumvariation, Langzeit-SNR und Hintergrundgeräusch-Variationsrate.

3. VAD-Einrichtung nach Anspruch 1 oder 2, wobei, wenn die VAD-Schwellenjustiereinheit einen beliebigen der durch die Hintergrundanalyseeinheit ausgegebenen Parameter empfängt, die VAD-Schwellenjustiereinheit dafür ausgelegt ist, das Bias der VAD-Schwelle gemäß aktuellen Werten der Parameter in Bezug auf die Hintergrundgeräuschvariation zu aktualisieren.

4. Verfahren zur Sprachaktivitätsdetektion bzw. VAD, mit den folgenden Schritten:

Analysieren von Hintergrundgeräuschmerkmalen eines aktuellen Signals gemäß einem VAD-Beurteilungsergebnis eines Hintergrundgeräuschs und Erhalten von Parametern in Bezug auf eine Hintergrundgeräuschvariation;

Erhalten eines Bias der VAD-Schwelle gemäß den Parametern in Bezug auf die Hintergrundgeräuschvariation und

Modifizieren einer zu modifizierenden VAD-Schwelle gemäß dem Bias der VAD-Schwelle und Durchführen von VAD-Beurteilung an dem Hintergrundgeräusch durch Verwendung der modifizierten VAD-Schwelle;

wobei das Verfahren zum Erhalten eines Bias der VAD-Schwelle gemäß den Parametern in Bezug auf die Hintergrundgeräuschvariation mindestens einen der folgenden Blöcke umfasst:

wenn die Einstellung spezifizierte Informationen nicht betrachten muss, Erhalten eines ersten Bias der VAD-Schwelle gemäß den Parametern in Bezug auf die Hintergrundgeräuschvariation und Verwenden des ersten Bias der VAD-Schwelle als ein Endbias der VAD-Schwelle;

wenn die Einstellung spezifizierte Informationen betrachten muss und der Hintergrundschall ein nichtgleichmäßiges Geräusch ist und/oder ein Rauschabstand (SNR) niedrig ist, Erhalten eines ersten Bias der VAD-Schwelle gemäß den Parametern in Bezug auf die Hintergrundgeräuschvariation und eines zweiten Bias der VAD-Schwelle gemäß den Parametern in Bezug auf die Hintergrundgeräuschvariation und den spezifizierten Informationen und Erhalten eines Endbias der VAD-Schwelle durch Kombinieren des ersten Bias der VAD-Schwelle und des zweiten Bias der VAD-Schwelle;

wenn die Einstellung spezifizierte Informationen betrachten muss und der Hintergrundschall ein gleichmäßiges Geräusch ist und/oder der SNR hoch ist, Erhalten eines ersten Bias der VAD-Schwelle gemäß den Parametern in Bezug auf die Hintergrundgeräuschvariation und Verwenden des ersten Bias der VAD-Schwelle als ein Endbias der VAD-Schwelle; und

wenn die Einstellung nur spezifizierte Informationen betrachtet, Erhalten eines zweiten Bias der VAD-Schwelle gemäß den Parametern in Bezug auf die Hintergrundgeräuschvariation und den spezifizierten Informationen und Verwenden des zweiten Bias der VAD-Schwelle als ein Endbias der VAD-Schwelle;

wobei die spezifizierten Informationen einen Arbeitspunkt angeben.

5. VAD-Verfahren nach Anspruch 4, wobei die Parameter in Bezug auf die Hintergrundgeräuschvariation einen Spitzen-Rauschabstand (SNR) des Hintergrundgeräuschs umfassen und die Parameter ferner mindestens eine der folgenden Alternativen umfassen: eine Hintergrund-Energievariationsgröße, eine Hintergrundgeräusch-Spektrumvariationsgröße, einen Langzeit-SNR und eine Hintergrundgeräusch-Variationsrate.

6. VAD-Verfahren nach Anspruch 4 oder 5, wobei, wenn irgendwelche der Parameter in Bezug auf die Hintergrundgeräuschvariation aktualisiert werden, das Verfahren Folgendes umfasst: Aktualisieren des Bias der VAD-Schwelle gemäß aktuellen Werten der Parameter in Bezug auf die Hintergrundgeräuschvariation.

7. VAD-Verfahren nach Anspruch 4, wobei das erste Bias der VAD-Schwelle mit mindestens einer der folgenden Alternativen zunimmt: Zunahme der Hintergrundgeräusch-Energievariation, Hintergrundgeräusch-Spektrumvariationsgröße, Hintergrundgeräusch-Variationsrate, Langzeit-SNR und Spitzen-SNR des Hintergrundgeräuschs.

8. VAD-Verfahren nach Anspruch 7, das ferner mindestens eine der folgenden Alternativen umfasst:

$$\text{vad\_thr\_delta} = \beta*(\text{snr\_peak-vad\_thr\_default});$$

$$\text{vad\_thr\_delta} = \beta*f(\text{var\_rate})*(\text{snr\_peak-vad\_thr\_default});$$

$$\text{vad\_thr\_delta} = \beta*f(\text{var\_rate})*f(\text{pow\_var})*(\text{snr\_peak-vad\_thr\_default});$$

$$\text{vad\_thr\_delta} = \beta*f(\text{var\_rate})*f(\text{spec\_var})*(\text{snr\_peak-vad\_thr\_default})$$

und

$$\text{vad\_thr\_delta} = \beta*f(\text{var\_rate})*f(\text{pow\_var})*f(\text{spec\_var})*(\text{snr\_peak-vad\_thr\_default});$$

wobei vad_thr_delta das erste Bias der VAD-Schwelle angibt; vad_thr_default die zu modifizierende VAD-Schwelle angibt; snr_peak den Spitzen-SNR des Hintergrundgeräuschs angibt; β eine Konstante ist; var_rate die Hintergrundgeräusch-Variationsrate angibt; f() eine Funktion angibt; pow_var die Hintergrund-Energiebvariationsgröße angibt; und spec_var die Hintergrundgeräusch-Spektrumvariationsgröße angibt.

9. VAD-Verfahren nach Anspruch 4, wobei ein Absolutwert des zweiten Bias der VAD-Schwelle mit mindestens einer der folgenden Alternativen zunimmt: Zunahme der Hintergrundgeräusch-Energievariation, Hintergrundgeräusch-Spektrumvariationsgröße, Hintergrundgeräusch-Variationsrate, Langzeit-SNR und Spitzen-SNR des Hintergrundgeräuschs.

10. VAD-Verfahren nach Anspruch 9, das ferner mindestens eine der folgenden Alternativen umfasst:

$$\text{vad\_thr\_delta\_out} = \text{sign}*\gamma*(\text{snr\_peak-vad\_thr\_default});$$

$$\text{vad\_thr\_delta\_out} = \text{sign}*\gamma*f(\text{var\_rate})*(\text{snr\_peak-vad\_thr\_default});$$

$$\text{vad\_thr\_delta\_out} = \text{sign}*\gamma*f(\text{var\_rate})*f(\text{pow\_var})*(\text{snr\_peak-vad\_thr\_default});$$

$$\text{vad\_thr\_delta\_out} = \text{sign}*\gamma*f(\text{var\_rate})*f(\text{spec\_var})*(\text{snr\_peak-vad\_thr\_default})$$

und

$$\text{vad\_thr\_delta\_out} = \text{sign}*\gamma*(\text{var\_rate})*f(\text{pow\_var})*f(\text{spec\_var})*(\text{snr\_peak-vad\_thr\_default}),$$

wobei vad_thr_delta_out das zweite Bias der VAD-Schwelle angibt; vad_thr_default die zu modifizierende VAD-Schwelle angibt; sign ein positives oder negatives Vorzeichen von vad_thr_delta_out angibt, das durch eine Orientierung der spezifizierten Informationen bestimmt wird; snr_peak den Spitzen-SNR des Hintergrundgeräuschs angibt; γ eine Konstante ist; var_rate die Hintergrundgeräusch-variationsrate angibt; f() eine Funktion angibt; pow_var die Hintergrund-Energievariationsgröße angibt; und spec_var die Hintergrundgeräusch-Spektrumvariationsgröße angibt.

**11.** Verfahren nach einem der Ansprüche 8 oder 10, wobei snr_peak ein größter SNR von jedem Hintergrundgeräuschrahmen zwischen zwei angrenzenden Nicht-Hintergrundgeräuschrahmen entsprechenden SNR ist oder

snr_peak ein kleinster SNR von jedem Nicht-Hintergrundgeräuschrahmen zwischen zwei angrenzenden Hintergrundgeräuschrahmen entsprechenden SNR ist oder snr_peak ein beliebiger von jedem Nicht-Hintergrundgeräuschrahmen zwischen zwei Hintergrundgeräuschrahmen mit einem Intervall kleiner als eine voreingestellte Anzahl von Rahmen entsprechenden SNR ist oder

snr_peak ein beliebiger von Nicht-Hintergrundgeräuschrahmen, die kleiner als eine voreingestellte Schwelle zwischen zwei Hintergrundgeräuschrahmen mit einem Intervall größer als eine voreingestellte Anzahl von Rahmen sind, entsprechenden SNR ist.

**12.** Verfahren nach Anspruch 11, wobei, wenn snr_peak ein beliebiger von Nicht-Hintergrundgeräuschrahmen, die kleiner als eine voreingestellte Schwelle zwischen zwei Hintergrundgeräuschrahmen mit einem Intervall größer als eine voreingestellte Anzahl von Rahmen sind, entsprechenden SNR ist, die Schwelle gemäß der folgenden Regel gesetzt wird: unter der Annahme, dass alle SNR der Nicht-Hintergrundgeräuschrahmen zwischen den zwei Hintergrundgeräuschrahmen zwei Mengen umfassen, wobei eine Menge aus allen SNR größer als eine Schwelle zusammengesetzt ist und die andere aus allen SNR kleiner als die Schwelle zusammengesetzt ist, wird eine Schwelle, die die Differenz zwischen Mittelwerten jeder Menge maximiert, als die voreingestellte Schwelle bestimmt.

## Revendications

**1.** Dispositif de détection d'activité vocale (VAD), comprenant :

une unité d'analyse de bruit de fond, conçue pour analyser des caractéristiques de bruit de fond d'un signal courant compte tenu d'un résultat d'évaluation de VAD d'entrée, obtenir des paramètres relatifs à une variation de bruit de fond, et fournir les paramètres obtenus ;
une unité de réglage de seuil de VAD, conçue pour obtenir un biais du seuil de VAD compte tenu des paramètres fournis par l'unité d'analyse de bruit de fond, et fournir le biais du seuil de VAD ;
une unité d'évaluation de VAD, conçue pour modifier un seuil de VAD à modifier compte tenu du biais du seuil de VAD fourni par l'unité de réglage de seuil de VAD, procéder à une évaluation de bruit de fond compte tenu du seuil de VAD modifié, et fournir un résultat d'évaluation de VAD ; et
une unité d'interface externe ;
le biais du seuil de VAD étant obtenu par adaptation interne de l'unité de réglage de seuil de VAD compte tenu des paramètres fournis par l'unité d'analyse de bruit de fond, et/ou par combinaison des informations de point de travail externes du dispositif de VAD reçues au moyen de l'unité d'interface externe et des paramètres fournis par l'unité d'analyse de bruit de fond, de sorte que :
lorsque le paramétrage ne tient compte que de l'adaptation interne de l'unité de réglage de seuil de VAD, ou lorsque le paramétrage tient compte des informations externes du dispositif de VAD et de l'adaptation interne de l'unité de réglage de seuil de VAD et que le bruit de fond du signal courant est un bruit continu et/ou le rapport signal/bruit (SNR) du signal courant est élevé, l'unité de réglage de seuil de VAD obtient un premier biais du seuil de VAD compte tenu des paramètres fournis par l'unité d'analyse de bruit de fond et fournit à l'unité d'évaluation de VAD le premier biais du seuil de VAD au titre de biais final du seuil de VAD ;
lorsque le paramétrage tient compte des informations externes du dispositif de VAD et de l'adaptation interne de l'unité de réglage de seuil de VAD et que le bruit de fond du signal courant est un bruit non continu et/ou le SNR du signal courant est faible, l'unité de réglage de seuil de VAD obtient un premier biais du seuil de VAD compte tenu des paramètres fournis par l'unité d'analyse de bruit de fond et un deuxième biais du seuil de VAD compte tenu des paramètres fournis par l'unité d'analyse de bruit de fond et des informations externes du dispositif, obtient un biais final du seuil de VAD en combinant le premier biais du seuil de VAD et le deuxième biais du seuil de VAD, et fournit à l'unité d'évaluation de VAD le biais final du seuil de VAD ; et
lorsque le paramétrage ne tient compte que des informations externes du dispositif de VAD, l'unité de réglage de seuil de VAD obtient un deuxième biais du seuil de VAD compte tenu des paramètres fournis par l'unité d'analyse de bruit de fond et des informations externes du dispositif, et fournit à l'unité d'évaluation de VAD le deuxième biais du seuil de VAD au titre de biais final du seuil de VAD.

**2.** Dispositif de VAD selon la revendication 1, les paramètres fournis par l'unité d'analyse de bruit de fond comprenant un rapport signal/bruit (SNR) maximal du bruit de fond, et pouvant en outre comprendre une variation d'énergie de bruit de fond et/ou une variation de spectre de bruit de fond et/ou un SNR à long terme et/ou un taux de variation de bruit de fond.

**3.** Dispositif de VAD selon la revendication 1 ou 2, lorsque l'unité de réglage de seuil de VAD reçoit l'un quelconque des paramètres fournis par l'unité d'analyse de bruit de fond, l'unité de réglage de seuil de VAD étant conçue pour mettre à jour le biais du seuil de VAD compte tenu de valeurs courantes des paramètres relatifs à la variation de bruit de fond.

**4.** Procédé de détection d'activité vocale (VAD), comprenant les étapes consistant à :

analyser des caractéristiques de bruit de fond d'un signal courant compte tenu d'un résultat d'évaluation de VAD d'un bruit de fond, et obtenir des paramètres relatifs à une variation de bruit de fond ;
obtenir un biais du seuil de VAD compte tenu des paramètres relatifs à la variation de bruit de fond ; et
modifier un seuil de VAD à modifier compte tenu du biais du seuil de VAD, et procéder à une évaluation de VAD sur le bruit de fond en utilisant le seuil de VAD modifié ;
l'étape consistant à obtenir un biais du seuil de VAD compte tenu des paramètres relatifs à la variation de bruit de fond comprenant au moins une des étapes suivantes :
lorsque le paramétrage n'a pas besoin de tenir compte d'informations spécifiées, obtenir un premier biais du seuil de VAD compte tenu des paramètres relatifs à la variation de bruit de fond, et utiliser le premier biais du seuil de VAD au titre de biais final du seuil de VAD ;
lorsque le paramétrage a besoin de tenir compte d'informations spécifiées et que le son de fond est un bruit non continu et/ou un rapport signal/bruit (SNR) est faible, obtenir un premier biais du seuil de VAD compte tenu des paramètres relatifs à la variation de bruit de fond et un deuxième biais du seuil de VAD compte tenu des paramètres relatifs à la variation de bruit de fond et des informations spécifiées, et
obtenir un biais final du seuil de VAD en combinant le premier biais du seuil de VAD et le deuxième biais du seuil de VAD ;
lorsque le paramétrage a besoin de tenir compte d'informations spécifiées et que le son de fond est un bruit continu et/ou le SNR est élevé, obtenir un premier biais du seuil de VAD compte tenu des paramètres relatifs à la variation de bruit de fond, et
utiliser le premier biais du seuil de VAD au titre de biais final du seuil de VAD ; et lorsque le paramétrage ne tient compte que d'informations spécifiées, obtenir un deuxième biais du seuil de VAD compte tenu des paramètres relatifs à la variation de bruit de fond et des informations spécifiées, et utiliser le deuxième biais du seuil de VAD au titre de biais final du seuil de VAD ;
les informations spécifiées indiquant un point de travail.

**5.** Procédé de VAD selon la revendication 4, les paramètres relatifs à la variation de bruit de fond comprenant un rapport signal/bruit (SNR) maximal du bruit de fond, les paramètres comprenant en outre amplitude de variation d'énergie de fond et/ou une amplitude de variation de spectre de bruit de fond et/ou un SNR à long terme et/ou un taux de variation de bruit de fond.

**6.** Procédé de VAD selon la revendication 4 ou 5, lorsque l'un quelconque des paramètres relatifs à la variation de bruit de fond est mis à jour, le procédé comprenant l'étape consistant à mettre à jour le biais du seuil de VAD compte tenu de valeurs courantes des paramètres relatifs à la variation de bruit de fond.

**7.** Procédé de VAD selon la revendication 4, le premier biais du seuil de VAD augmentant avec une augmentation de la variation d'énergie de bruit de fond et/ou de l'amplitude de variation de spectre de bruit de fond et/ou du taux de variation de bruit de fond et/ou du SNR à long terme et/ou du SNR maximal du bruit de fond.

**8.** Procédé de VAD selon la revendication 7, comprenant en outre au moins une des formules suivantes :

$$\text{vad\_thr\_delta} = \beta*(\text{snr\_peak-vad\_thr\_default}) ;$$

$$vad\_thr\_delta = \beta*f(var\_rate)*(snr\_peak-vad\_thr\_default)\ ;$$

$$vad\_thr\_delta = \beta*f(var\_rate)*f(pow\_var)*(snr\_peak-vad\_thr\_default)\ ;$$

$$vad\_thr\_delta = \beta*f(var\_rate)*f(spec\_var)*(snr\_peak-vad\_thr\_default)\ ;$$

et

$$vad\_thr\_delta = \beta*f(var\_rate)*f(pow\_var)*f(spec\_var)*(snr\_peak-vad\_thr\_default),$$

vad_thr_delta indiquant le premier biais du seuil de VAD ; vad_thr_default indiquant le seuil de VAD à modifier ; snr_peak indiquant le SNR maximal du bruit de fond ; β étant une constante ; var_rate indiquant le taux de variation de bruit de fond ; f() indiquant une fonction ; pow_var indiquant l'amplitude de variation d'énergie de fond ; et spec_var indiquant l'amplitude de variation de spectre de bruit de fond.

**9.** Procédé de VAD selon la revendication 4, une valeur absolue du deuxième biais du seuil de VAD augmentant avec une augmentation de la variation d'énergie de bruit de fond et/ou de l'amplitude de variation de spectre de bruit de fond et/ou du taux de variation de bruit de fond et/ou du SNR à long terme et/ou du SNR maximal du bruit de fond.

**10.** Procédé de VAD selon la revendication 9, comprenant en outre au moins une des formules suivantes :

$$vad\_thr\_delta\_out = sign*\gamma*(snr\_peak-vad\_thr\_default)\ ;$$

$$vad\_thr\_delta\_out = sign*\gamma*f(var\_rate)*(snr\_peak-vad\_thr\_default)\ ;$$

$$vad\_thr\_delta\_out = sign*\gamma*f(var\_rate)*f(pow\_var)*(snr\_peak-vad\_thr\_default)\ ;$$

$$vad\_thr\_delta\_out = sign*\gamma*f(var\_rate)*f(spec\_var)*(snr\_peak-vad\_thr\_default)\ ;$$

et

$$vad\_thr\_delta\_out = sign*\gamma*f(var\_rate)*f(pow\_var)*f(spec\_var)*(snr\_peak-vad\_thr\_default),$$

vad_thr_delta_out indiquant le deuxième biais du seuil de VAD ; vad_thr_default indiquant le seuil de VAD à modifier ; sign indiquant un signe positif ou négatif de vad_thr_delta_out défini par une orientation des informations spécifiées ; snr_peak indiquant le SNR maximal du bruit de fond ; γ étant une constante ; var_rate indiquant le taux de variation de bruit de fond ; f() indiquant une fonction ; pow_var indiquant l'amplitude de variation d'énergie de fond ; et spec_var indiquant l'amplitude de variation de spectre de bruit de fond.

**11.** Procédé selon l'une quelconque des revendications 8 ou 10, snr_peak représentant un SNR le plus élevé parmi des SNR correspondant à chaque trame de bruit de fond entre deux trames non de bruit de fond adjacentes ; ou snr_peak représentant un SNR le plus faible parmi des SNR correspondant à chaque trame non de bruit de fond entre deux trames de bruit de fond adjacentes ; ou snr_peak représentant un SNR quelconque parmi des SNR correspondant à chaque trame non de bruit de fond entre deux trames de bruit de fond séparées d'un intervalle inférieur à un nombre prédéfini de trames ; ou snr_peak représentant un SNR quelconque parmi des SNR correspondant à des trames non de bruit de fond plus petites qu'un seuil prédéfini entre deux trames de bruit de fond séparées d'un intervalle supérieur à un nombre prédéfini de trames.

12. Procédé selon la revendication 11, si snr_peak représente un SNR quelconque parmi des SNR correspondant à des trames non de bruit de fond plus petites qu'un seuil prédéfini entre deux trames de bruit de fond séparées d'un intervalle supérieur à un nombre prédéfini de trames, le seuil étant défini compte tenu de la règle suivante : en supposant que tous les SNR des trames non de bruit de fond entre les deux trames de bruit de fond comprennent deux groupes, un groupe comprenant tous les SNR supérieurs à un seuil et l'autre groupe comprenant tous les SNR inférieurs au seuil, un seuil qui maximise la différence entre des valeurs moyennes de chaque groupe est établi comme le seuil prédéfini.

Parameters related to the
background noise variation

Background
analyzing unit

VAD threshold
adjusting unit

External
interface unit

External
information

VAD
judgment result

Bias of the
VAD threshold

Input signal

VAD judging
unit

VAD judgment result

FIG. 1

EP 2 159 788 B1

S1

Analyze background noise features of the current signal according to the VAD judgment result of the background noise, and obtain parameters related to the background noise variation

S2

Obtain a bias of the VAD threshold according to the parameters related to the background noise variation

S3

Modify a VAD threshold to be modified according to the bias of the VAD threshold, and perform VAD judgment on the background noise by using the modified VAD threshold

End

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6453291 B1